# EUROPÄISCHE PATENTSCHRIFT

(11) **EP 1 151 188 B1**
(45) Veröffentlichungstag und Bekanntmachung des Hinweises auf die Patenterteilung: **05.07.2006**
(21) Anmeldenummer: 00990674.4
(22) Anmeldetag: 08.12.2000
(51) Int. Cl.: F02D 21/08

(54) **VERFAHREN ZUR ABGASRÜCKFÜHRUNG IM LUFTEINTRITTSBEREICH VON FAHRZEUG-BRENNKRAFT-MASCHINEN SOWIE VORRICHTUNG**
METHOD FOR EXHAUST GAS RECIRCULATION TO AN AIR INLET REGION OF A VEHICLE INTERNAL COMBUSTION ENGINE AND A DEVICE
PROCEDE DE RECYCLAGE DE GAZ D'ECHAPPEMENT DANS LA ZONE D'ADMISSION D'AIR DE MOTEURS A COMBUSTION INTERNE DE VEHICULES ET DISPOSITIF CORRESPONDANT

(30) Priorität: 10.12.1999 DE 19959854
(43) Veröffentlichungstag der Anmeldung: 07.11.2001
(73) Patentinhaber: Heraeus Electro-Nite International N.V., 3530 Houthalen (BE)
(72) Erfinder: WIENAND, Karlheinz, 63741 Aschaffenburg (DE); MUZIOL, Matthias, 63500 Seligenstadt (DE); ULLRICH, Karlheinz, 64823 Grossumstadt (DE); DAMASCHKE, Gerhard, 65439 Flörsheim (DE)
(74) Vertreter: Kühn, Hans-Christian
(86) Internationale Anmeldenummer: PCT/EP2000/012363
(87) Internationale Veröffentlichungsnummer: WO 2001/042640

(56) Entgegenhaltungen:
- EP-A- 0 810 361
- US-A- 4 177 777
- US-A- 4 318 385
- US-A- 6 095 123
- PATENT ABSTRACTS OF JAPAN vol. 018, no. 325 (M-1625), 21. Juni 1994 (1994-06-21) & JP 06 074100 A (FUJI HEAVY IND LTD), 15. März 1994 (1994-03-15)

## Beschreibung

Die Erfindung betrifft ein Verfahren nach dem Oberbegriff des Anspruchs 1 und eine Vorrichtung nach dem Oberbegriff des Anspruchs 13.

Derartiges ist in US 4,177,777 offenbart.

Aus der DE 42 11 851 C2 ist ein Verfahren zur Bestimmung des Zylinderluftmasseflusses bei einem elektronischen Motorsteuerungssystem eines Verbrennungsmotors mit einer Abgasrückführungseinrichtung bekannt. Es bezieht sich auf ein Verfahren zum Steuern eines Verbrennungsmotors mit einem Abgasrückführ(AGR)-System zum Regeln der Schadstoffemission, wobei ein genauer Wert für den Ansaugluftmassefluss (Zylinderluftmassefluss) des Gases ermittelt wird, wie es aktuell bei aktivem Zustand des AGR-Systems in einen Motorzylinder eingeführt wird; dies ist für eine gute Motorsteuerung erforderlich. Weiterhin wird ein Verfahren zum genauen Bestimmen der Menge einzuspritzenden Kraftstoffs beschrieben, wobei die Transportverzögerung des Kraftstoffs im Saugstutzen berücksichtigt wird.

Zum Zwecke der Steuerung bzw. Regelung von Schadgasemission und zum Einsparen von Kraftstoff verwenden Verbrennungsmotoren für Kraftfahrzeuge elektronische Regelsysteme, die das Luft/Kraftstoff-Mischungsverhältnis im wesentlichen im gesamten Motorbetriebsbereich auf einen Sollwert halten. Um das Luft/Kraftstoff-Mischungsverhältnis mit hoher Genauigkeit zu regeln, wird der Zylinderluftmassefluss des aktuell in einen Motorzylinder gesaugten Gases genau bestimmt und der erforderliche Kraftstofffluss wird auf Grundlage der Werte für den Ansaugluftmassenfluss und das Soll-Luft/Kraftstoff-Verhältnis bestimmt.

Als problematisch erscheint hier die verhältnismäßig komplexe Ermittlung des rückgeführten Abgasmasseflusses.

Weiterhin ist es aus der DE-OS 22 35 568 bekannt, Schadstoffanteile in Abgasen von Verbrennungskraftmaschinen zu beseitigen, um die umgebende Luft möglichst reinzuhalten; die Schadstoffanteile bestehen im wesentlichen aus Kohlenmonoxid und verbrannten Kohlenwasserstoffen und Stickoxiden. Zur Beseitigung von Kohlenmonoxid und verbrannten Kohlenwasserstoffen wurden thermische und katalytische Nachverbrennungsverfahren entwickelt; weiterhin wird die Möglichkeit verfolgt, eine Verringerung der Stickoxidemission durch Rückführung eines Teils der Verbrennungsabgase in den Verbrennungsraum zu erreichen (Abgasrückführung). Durch die Rückführung eines Teils der im wesentlichen aus inerten Gasen bestehenden Abgase wird die Verbrennungsspitzentemperatur in dem Hauptverbrennungsraum so herabgesetzt, dass die Emission von Stickoxiden entscheidend verringert wird. Für die Abgasrückführung werden im Allgemeinen bis zu 15 Prozent der gesamten Abgasmenge herangezogen, die an irgendeiner Stelle des Abgaskanals entnommen werden.

Aus der US 44 62 376 ist ein Verfahren zur Ermittlung und Regelung einer Abgasrückführungsrate bei internen Brennkraft-Maschinen (Dieselmotoren) bekannt, wobei ein Stellglied in der Abgasrezirkulationskette durch einen Regler einjustiert wird, um eine präzise Regulierung der Abgasmenge zu erhalten, die in die Lufteinlasszone des Motors zurückgeführt wird. Der Regler wird mit der Abgastemperatur versorgt, die zu einer bestimmten Zeit als Belastungssignal für die Maschine gilt. Das Vergleichssignal des Reglers ist dann entweder ein aktueller Wert der Abgasrezirkulationsrate, die durch Einrichtungen zur effektiven Temperaturmessung im Einlassbereich des Motors ermittelt wird oder es wird eine vorgegebene Temperaturdifferenz ermittelt, die durch Einrichtungen zur Messung der angesaugten Luftmenge zu einer gegebenen Zeit ermittelt wird.

Ein Problem ist darin zu sehen, dass eine optimale Einstellung des Arbeitspunktes, die zu einer geringen Umweltbelastung führen würde, nicht ohne weiteres möglich ist.

Die Erfindung stellt sich die Aufgabe, aus ermittelten Parametern der Fahrzeug-Brennkraft-Maschine eine Optimierung des Motorbetriebes hinsichtlich geringer Umweltbelastung und Effizienz zu erzielen, wobei die Parameter auf möglichst einfache Weise ermittelt werden sollen.

Die Aufgabe wird verfahrensgemäß durch das kennzeichnen des Ansprüchs 1 und Vorrichtungsgemäß durch das Kennzeichen des Anspruchs 13 gelöst.

Erfindungsgemäß weist der Strömungsmassensensor wenigstens einen Messwiderstand und wenigstens einen Heizwiderstand auf.

Vorteilhafte Ausgestaltungen des Verfahrens sind in den Ansprüchen 2 bis 12 angegeben.

In einer vorteilhaften Ausgestaltung des Verfahrens wird aus der Maschine austretendes Abgas vor seiner Kühlung von Verbrennungsprodukten gereinigt. Weiterhin ist insbesondere bei größeren Motoren (z.B. für Lkw) eine Abkühlung des Abgases - vorzugsweise auf eine Temperatur im Bereich von 70°C bis 300°C - vorgesehen.

Mit Hilfe eines Stellsignals (Y, Y1) wird wenigstens ein Stellglied in der Abgasrückführung angesteuert, das vorzugsweise als steuerbares Ventil ausgebildet ist.

In einer bevorzugten Ausgestaltung des Verfahrens wird das Sollwert-Signal (W) aus einem Leistungsvorgabesignal (z.B. Gaspedal) und wenigstens einem Parameter der Maschine abgeleitet. Als Parameter ist wenigstens ein Signal vorgesehen, das aus der Abgastemperatur oder der Drehzahl sowie der Masse der anströmenden Luft gebildet wird. Dabei wird wenigstens ein Signal als Maschinenparameter mit einem Referenzsignal durch Differenzwertbildung verglichen, wobei das Überschreiten eines vorgegebenen Differenzwertes zu einem Stellsignal (Y, Y1, Y2) führt.

Während die Stellsignale Y, Y1 - vorzugsweise mittels steuerbarem Ventil - direkt in die Abgas-Rückführung eingreifen, wirkt Stellsignal Y2 auf ein Stellglied ein, das sich im Eintrittsbereich der Brennkraftmaschine befindet, in den ein Gemisch aus anströmender Luft und aus teilweise rückgeführtem Abgas einströmt.

Vorzugsweise wirkt Stellsignal Y2 auf einen Kompressor im Eintrittsbereich der Brennkraft-Maschine ein, wobei mit Hilfe von Stellsignal Y2 die Einstellung von Schaufelwinkeln nach dem "Prinzip der variablen Schaufelgeometrie bei Kompressoren" vorgenommen wird.

Es ist jedoch auch möglich Stellsignal Y2 auf eine Ventilanordnung einwirken zu lassen.

Vorzugsweise werden die Signale mittels A/D-Wandler in digitale Signale gewandelt und gespeichert, wobei anschließend ein Vergleich der gespeicherten Werte mit digitalen Referenzwerten durchgeführt wird.

In einer bevorzugten Ausgestaltung des Verfahrens werden im Strömungsmassen-Sensor wenigstens zwei auf konstanter Temperatur gehaltene Heizwiderstände nacheinander zur Messung der Strömungsmasse des Abgases angeströmt; dabei werden die Heizwiderstände jeweils von einem verstellbaren Strom (I₁, I₂) durchflossen, wobei aus der Stärke der Ströme (I₁, I₂) ein Signal für die Strömungsmasse und deren Richtung gebildet wird.

Weiterhin wird in einer vorteilhaften Ausgestaltung des Verfahrens aus wenigstens einem pulsierenden Strom I₁, I₂ durch abwechselnde Multiplikation der Strom-Amplitude mit +1 und -1 und eine anschließende Differenzwertbildung der resultierende Fluss des Massestroms ermittelt.

Beispielsweise wird eine Vorrichtung zur (teilweisen) Abgasrückführung aus einem Austrittsbereich einer Fahrzeug-Brennkraft-Maschine in einen Lufteintrittsbereich bereitgestellt, bei der ein mittels Regelung einstellbares Gemisch aus Abgas und einströmender Luft der Maschine zuführbar ist, wobei zur Ermittlung der Masse der Luft ein Strömungsmassen-Sensor vorgesehen ist und eine Kraftstoff-Menge in Abhängigkeit von der Luftmassen-Durchflussrate unter Berücksichtigung eines Leistungsvorgabe-Signals einstellbar ist, wobei der Austrittsbereich über einen Strömungskanal für die Abgasrückführung, der wenigstens einen Temperatur-Sensor, ein steuerbares Ventil als Stellglied und einen weiteren Strömungsmassen-Sensor aufweist, mit einem Eintrittsbereich der Brennkraft-Maschine verbunden ist und wobei der Strömungsmassensensor wenigstens einen Messwiderstand und wenigstens einen Heizwiderstand aufweist.

Vorteilhafte Ausgestaltungen der Vorrichtung sind in den Ansprüchen 14 bis 23 angegeben.

In einer für die Praxis zweckmäßigen Ausführungsform der Vorrichtung ist im Strömungskanal für die Abgasrückführung zwischen dem Austrittsbereich und dem weiteren Strömungsmengen-Sensor eine Abgas-Kühlvorrichtung angeordnet.

In einer ersten vorteilhaften Ausgestaltung der Vorrichtung weist der Massenstrom-Sensor wenigstens einen temperaturabhängigen Messwiderstand schneller Ansprechzeit auf. Vorteilhafterweise_ist der Messwiderstand als Dünnschicht- oder Dickschicht-Element auf der messtechnischen Basis von Platin- bzw. Platingruppenmetall ausgebildet.

In einer ersten Ausgestaltung der Vorrichtung weist der Strömungsmassen-Sensor wenigstens einen Messwiderstand und wenigstens einem Heizwiderstand auf, wobei die Widerstände jeweils in Mikrosystemtechnik ausgebildet sind.

Der Heizwiderstand bzw. die Heizwiderstände sind für einen Betrieb im Temperaturbereich von 350 bis 750 °C vorgesehen.

Ein Massenstrom-Sensor mit einem Messwiderstand kurzer Ansprechzeit und einem schnellen Mikroheizer ist beispielsweise aus der EP 0 964 230 A2 bekannt.

In einer zweiten vorteilhaften Ausgestaltung der Erfindung weist der Massenstrom-Sensor mindestens zwei schnelle Mikroheizer bzw. Heizwiderstände auf, die auf wohl definierten festen Übertemperaturen z.B. 450°C und 550 °C betrieben werden. Die Temperaturen sind so gewählt, dass sich ansetzender Ruß durch Pyrolyse stets verbrannt wird und die Mikroheizer somit stets sauber bleiben. Eine schnelle Regelelektronik speist die Heizer mittels Strom so, dass ihre Temperaturen konstant gehalten werden. Die Auswertung der Heizströme lässt einen eindeutigen Rückschluss sowohl auf den Massenstrom als auch auf die Massentemperatur zu. Durch Verwendung von Platin-Heizelementen, die sowohl in Dick- als auch in Dünnschichttechnik hergestellt sein können, lassen sich unter Ausnutzung der wohldefinierten Widerstands-Temperatur-Kennlinie von Platin Heiztemperaturen von 350°C bis 750°C einstellen.

Ein wesentlicher Vorteil der zweiten Ausgestaltungsform (zwei Heizwiderstände) ist darin zu sehen, dass auf den Heizwiderständen praktisch keinerlei Verrußung vorkommt, so dass sie stets mit optimaler Messcharakteristik betrieben werden.

Die Heiz- bzw. Messwiderstände sind vorteilhafterweise in wenigstens zwei Leiterbahnen auf einer plattenförmigen Membran - vorzugsweise aus einem elektrisch isolierenden und wärmebeständigem Werkstoff wie beispielsweise Keramik - ausgebildet.

Der Gegenstand der Erfindung ist nachfolgend anhand der Figuren 1a bis 3c näher erläutert.
Figur 1a zeigt schematisch den Aufbau eines Regelkreises für eine Brennkraft-Maschine mit Abgasrückführung,
Figur 1b zeigt im Diagramm eine Funktion der Anzahl von Verbrennungsprodukten V in g/km in Abhängigkeit von der Abgasrückführrate R,
Figur 1c stellt zur besseren Veranschaulichung des Optimierungsprozesses - wie er beispielsweise auf dem 16. Wiener Motorensymposium vom 4. bis 5. Mai diskutiert wurde - ein Diagramm über relative Änderungen des Ausstoßes von Kohlenwasserstoffen (HC), Partikeln und Stockoxiden (NOx) in Abhängigkeit von der Abgasrückrührrate dar.
Figur 2 stellt schematisch den Aufbau eines Regelkreises für zwei Regelgrößen dar.
Figur 3a zeigt den Strömungsmengen-Sensor für die Abgasrückführung im Längsschnitt;
Figur 3b stellt den eigentlichen Strömungsmengen-Sensor dar.
Figur 3c zeigt in einer ausschnittsweisen Vergrößerung des Strömungskanals für die Abgasrückführung mit dem eigentlichen Messelements,

Gemäß Figur 1a weist die Brennkraft-Maschine 1 einen mit Aufladung versehenen Eintrittsbereich 2 für anströmende Luft und zurückgeführtes Abgas auf; weiterhin ist auf der Abgasseite der Maschine ein Austrittsbereich 4 vorgesehen, von dem aus ein Teil des Abgases in einen Strömungskanal 6 zur Abgasrückführung geführt wird, der mit einem steuerbaren Ventil 5, einer optionalen Abgas-Kühlvorrichtung 8 sowie einem Abgas-Strömungsmengen-Sensor 10 versehen ist. Der Strömungsmengen-Sensor 10 misst die Menge des zurückgeführten Abgases. Das steuerbare Ventil 5 dient zur Regelung des Abgas-Partialdruckes zwecks Einstellung eines spezifischen Mengenverhältnisses zwischen frisch anströmender Luft und der Menge des partiell zurückgeführten Abgases; das steuerbare Ventil 5 wird von einem Regler 15 mittels eines Stellsignals Y angesteuert. Der Strömungskanal 6 für die Abgas-Rückführung endet in einer als Mischkammer ausgebildeten Einmündung 12 einer Frischlufteinleitung 13 im Eintrittsbereich 2 der Maschine 1, wobei zur Messung anströmender Frischluft ebenfalls ein Strömungsmengen-Sensor 14 vorgesehen ist.

Der im Austrittsbereich 4 der Maschine 1 in die Rückführung zu Strömungskanal 6 abgezweigte Teil des Abgases durchströmt somit nacheinander Ventil 5, Kühlvorrichtung 8 (optional) und Strömungsmengen-Sensor 10; das rückgeführte Abgas trifft in der Einmündung 12 auf die einströmende Luft der Frischluft-Einleitung 13, nachdem diese den Massenstromsensor 14 durchlaufen hat.

Das Gemisch aus anströmender Luft und Abgas wird einer Ladevorrichtung mit Kompressor 30 zugeführt, die vorzugsweise als Abgas-Turbolader ausgebildet ist, wobei die zugehörige Antriebsturbine im Austrittsbereich 4 zwecks besserer Übersicht nicht dargestellt ist.

Der nicht zur Rückführung vorgesehene Teil des Abgases gelangt über eine Leitung 25 - und ggf. eine Reinigungseinrichtung - ins Freie, wobei die Durchschnitts-Temperatur des Abgases bei ca. 400°C bis 700°C liegt.

Weiterhin kann sich im Bereich des Abgas-Austrittsbereiches 4 ein Temperatur-Sensor 16 zur Messung der Abgastemperatur befinden. Der hier symbolisch dargestellte Regler 15 erhält über Leitung 21 ein der Abgastemperatur entsprechendes Signal X1 und über Leitung 23 ein Signal Z, entsprechend der vom Strömungsmengen-Sensor 14 gemessenen Menge der anströmenden Frischluft; da diese Menge der anströmenden Frischluft normalerweise nicht verstellbar ist, wird diese durch das in der Regelungstechnik für Störgrößen verwendete Symbol Z dargestellt.

Weiterhin wird dem Regler über Leitung 24 ein Sollwert W zur Regelung des Signale X für die Abgastemperatur zugeführt, aus dem sich mit Hilfe des von Regler 15 abgegebenen Stellsignals ein spezifisches Verhältnis für die partiellen Ströme der über Massenstromsensor 14 frisch eintretenden Luftmasse sowie der partiellen Rückführung des über Massenstromsensor 10 geführten Abgases einstellen lässt. Eine besondere Ausführungsform des Massenstromsensors liefert das Abgasrückführtemperatursignal mit. Aber auch die bisherige Abgastemperaturmessung mittels Temperatur-Sensor 16 kann durch mathematische Modellbildung zur Verfügung gestellt werden und als Sensor entfallen.

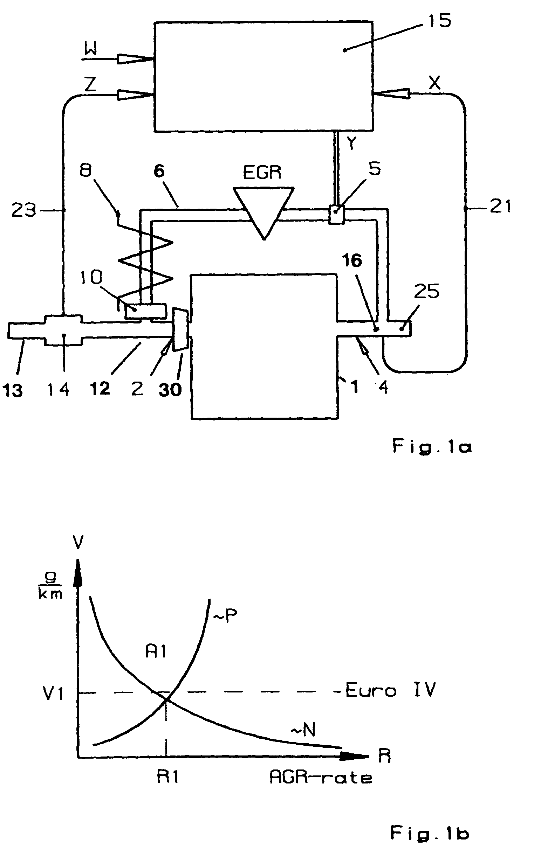

In Figur 1b ist schematisch die Summe V der abgegebenen Schadstoff-Partikel sowie der Stickoxide in g/kg dargestellt, wobei eine Funktion in Abhängigkeit von der Rückführrate R dargestellt ist. Anhand Figur 1b ist erkennbar, dass die Menge der Stickoxide der Kurve N mit zunehmender Rückführrate abfällt, während die abgegebenen Schadstoffpartikel der Kurve P zunehmen. In dem mit Punkt A1 bezeichneten Bereich des Diagramms kreuzen sich die Kurve P der Partikel und die Kurve N der Stickoxide in einer Art Optimum, so dass die Euronorm IV erfüllt werden kann.

Gemäß dem Diagramm in Figur 1b wird mit Hilfe des Reglers 15 (Figur 1a) das Stellsignal Y so gebildet, dass sowohl ein minimaler Partikelausstoß gemäß Kurve P, als auch ein minimaler Stickoxidausstoß gemäß Kurve N gemäß dem Diagramm eingestellt wird, in dem die Verbrennungsprodukte V1 in g/km über der Abgas-Rückführrate R aufgetragen sind. Der optimale Arbeitspunkt A1 liegt im Schnittpunkt der Kurven P und N, bei den Koordinatenwerten R1 und V1.

Bei der in Figur 1a dargestellten Regelung handelt es sich um eine vereinfachte Ausführungsform der Regelung, bei der lediglich die Abgastemperatur als Regelgröße bzw. Istwertsignal X dem Regler zugeführt wird, wobei diese Größe mit einer Leistungsvorgabe als Sollwert W (z.B. Stellung eines Gaspedals im Fahrzeug) verglichen wird und bei Regelabweichung ein Stellsignal Y auf das steuerbare Ventil 5 so einwirkt, dass stets nur soviel Abgas über den Strömungskanal 6 der Abgas-Rückführung zurückgeführt wird, dass die Leistungsvorgabe des Sollwerts W aufrechterhalten wird.

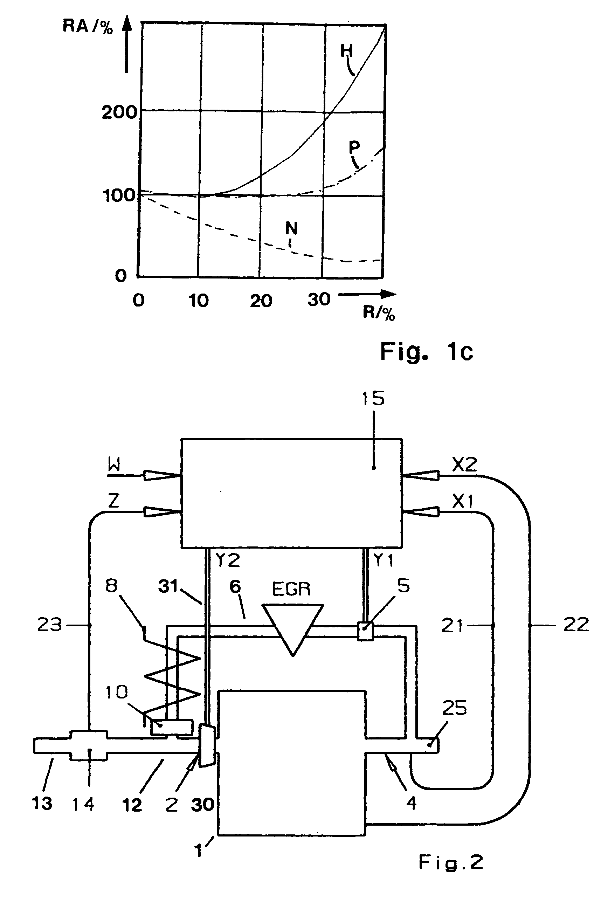

Es ist jedoch auch möglich, den Regler 15 als sogenannten Zweigrößenregler einzusetzen, wobei beispielsweise die Abgastemperatur über Leitung 21 als Signal X1 sowie die Drehzahl n der Brennkraft-Maschine über Leitung 22 als Signal X2 dem Regler zugeführt werden, wobei diese beiden Größen X1 und X2 gemäß der nachstehend erläuterten Figur 2 miteinander verkoppelt sein können.

Anhand Figur 1c ist erkennbar, dass die im Diagramm mit "H" bezeichneten Kohlenwasserstoffe HC im Abgas im Bereich einer Abgasrückführrate R von 15 bis 20% ausgehend vom Bereich "relativer Änderungen" RA zwischen ca. 100% und 125% ansteigen, während die mit "P" bezeichneten Abgas-Partikel erst ab einer Abgas-Rückrührrate von mehr als 30% ansteigen. Die im Abgas befindlichen Stickoxide NOx, deren Kurve mit "N" bezeichnet ist, werden dagegen von einem Ausgangswert von RA bei 100% bei einer Abgasrückführrate von 0% bis zu einem Stickoxid-Wert im Bereich von ca. 50% bei ca. 10 % Abgasrückführrate reduziert, wobei sich der NOx-Wert bei einer Abgasrückführrate von 40% auf einen Stickoxid-Wert von ca. 20% weiter verringern lässt.

Anhand des Diagramms der Figur 1c ist es ersichtlich, dass eine Optimierung der verschiedenen Parameter des Abgases für eine Abgasrückführrate im Bereich von ca. 15 bis 30% möglich ist.

Die für Abgase in Nutzkraftfahrzeugen ab einem zulässigen Gesamtgewicht von über 3,5 t vorgesehenen Höchstwerte der Euro-Norm IV (Abgas) ergeben sich aus der folgenden Tabelle:

Nutzkraftfahrzeuge für zul. Gesamtgewicht ≥ 3,5 t:

| Bisherige Norm: | Euro IV-Norm |
|---|---|
| CO 4.0 g/kW/h | 4.0 g/kW/h |
| HC 1.1 g/kW/h | 0 g/kW/h |
| NOx 7.0 g/kW/h | 2.0 g/kW/h |
| PM 0,15 g/kW/h | 0,08 g/kW/h |

Gemäß Figur 2 ist eine Zweigrößenregelung vorgesehen, wobei ähnlich wie in Figur 1a die Abgastemperatur als Regelgröße X1 über Leitung 21 dem Regler 15 zugeführt wird und darüber hinaus die Drehzahl n als Regelgröße X2 über Leitung 22 ebenfalls dem Regler 15 zugeführt wird. Mit einer ersten Stellgröße Y1 wird ein steuerbares Ventil 5 in der Abgasrückführung bzw. im Strömungskanal 6 gesteuert, während Stellsignal Y2 des Reglers 15 den Anstellwinkel der Kompressorschaufeln im Kompressor 30 des Eintrittsbereiches verstellt, so dass ein optimaler Kompromiss zwischen Partikelausstoß und Stickoxidausstoß gemäß Figur 1b Arbeitspunkt A1 aufrechterhalten wird. Das Stellsignal Y2 wird über Leitung 31 an den Kompressor 30 geführt. Dabei ist es wichtig, dass sowohl die zurückgeführte Abgasmenge über Stellsignal Y1 als auch die komprimierte Menge des einströmenden Abgasluftgemisches möglichst exakt geregelt werden kann, um den optimalen Arbeitspunkt gemäß Figur 1b einzustellen.

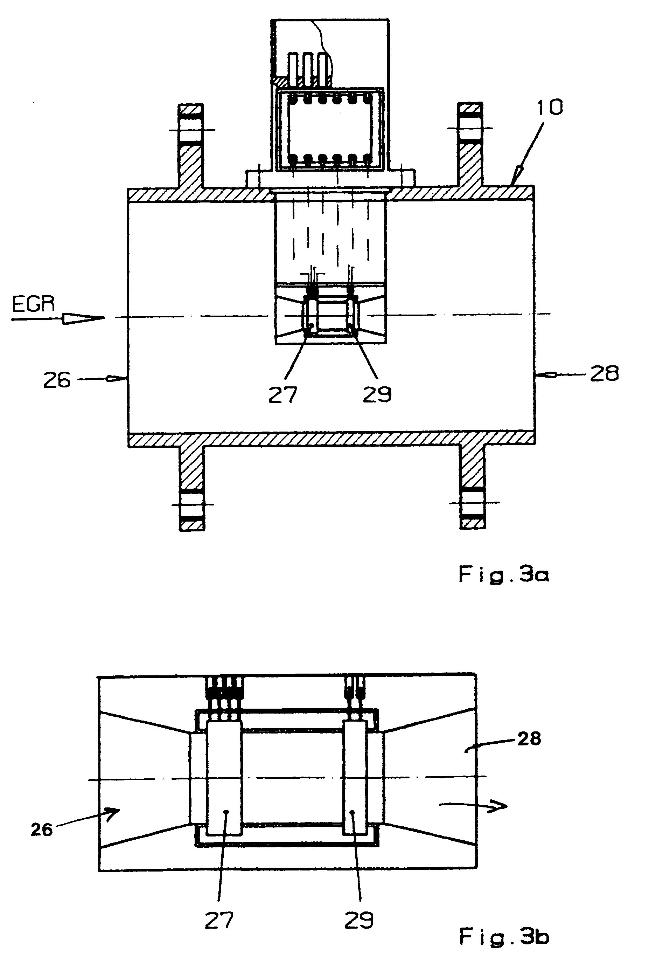

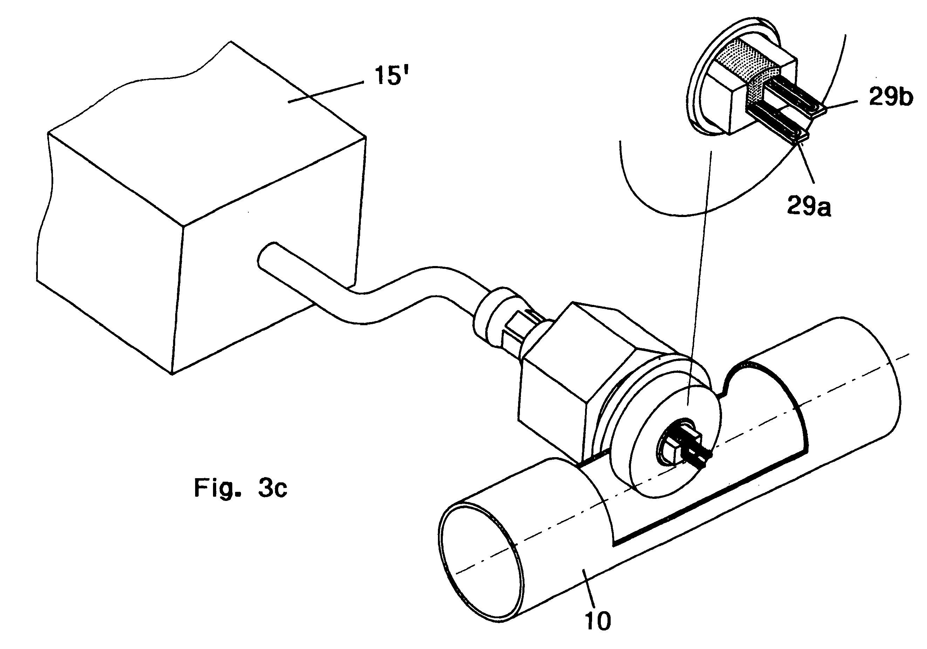

Figur 3a zeigt im Längsschnitt den Strömungsmengen-Sensor 10, wobei zusätzlich elektrische Anschlussverbinder oberhalb des im Längsschnitt dargestellten Sensorgehäuses erkennbar sind. Der Eingangsbereich ist mit Zeichen 26, der Ausgangsbereich mit Zeichen 28 versehen.

In Figur 3b ist der Massenstromsensor 10 im Längsschnitt vergrößert dargestellt, wobei im Eingangsbereich 26 das Element 27 erkennbar ist, während im Austrittsbereich 28 Heizelement 29 erkennbar ist. Die Funktion eines solchen Strömungsmengen-Sensors ist beispielsweise aus der DE 44 06 331.8 bekannt.

In Figur 3c ist der Strömungsmengen-Sensor 10 im Ausschnitt des Strömungskanals 6 nach dem Zwei- oder Mehrheizerprinzip dargestellt. In dieser Figur sind zwei Heizelemente 29a, 29b als Mikroheizer zu erkennen. Der zugehörige Regler ist als Teil der bruchstückhaft dargestellten Motorsteuer-Elektronik ausgebildet, die hier mit Zeichen 15' versehen ist.

## Patentansprüche

1. Verfahren zur teilweisen Abgasrückführung in einen Lufteintrittsbereich einer Fahrzeug-Brennkraft-Maschine, bei dem ein mittels Regelung einstellbares Gemisch aus Abgas und einströmender Luft der Maschine zugeführt wird, wobei die Masse der Luft durch einen Strömungsmassen-Sensor (14) ermittelt und eine Kraftstoff-Menge in Abhängigkeit von der Luftmassendurchflussrate unter Berücksichtigung eines Leistungsvorgabe-Signals zugeführt wird, wobei aus der Maschine (1) austretendes Abgas einem weiteren Strömungsmassen-Sensor (10) in einem Abgasrückführkanal (6) zugeführt wird, wobei aus den ermittelten Strömungsmassen von einströmender Luft und rückgeführtem Abgas ein Istwert-Signal (X, X1, X2) gebildet und mit einem Sollwert-Signal (w) für einen optimalen Arbeitspunkt der Maschine verglichen wird, wobei eine Regelabweichung des Istwert-Signals zu einem Stellsignal führt, das mittels eines Stellglieds (5) in die Abgasrückführung eingreift, **dadurch gekennzeichnet, dass** der weitere Strömungsmassen-Sensor (10) wenigstens einen Messwiderstand und wenigstens einen Heizwiderstand aufweist.

2. Verfahren nach Anspruch 1, **dadurch gekennzeichnet, dass** aus der Maschine (1) austretendes Abgas von Verbrennungsprodukten gereinigt wird.

3. Verfahren nach Anspruch 1 oder 2, **dadurch gekennzeichnet, dass** das aus der Maschine (1) austretende Abgas gekühlt wird.

4. Verfahren nach einem der Ansprüche 1 bis 3, **dadurch gekennzeichnet, dass** das Abgas vor Eintritt in den Strömungsmassen-Sensor (10) auf eine Temperatur im Bereich 70°C bis 300°C abgekühlt wird.

5. Verfahren nach einem der Ansprüche 1 bis 4, **dadurch gekennzeichnet, dass** mit Hilfe des Stellsignals (Y, Y1) wenigstens ein Ventil (5) als Stellglied im Strömungskanal (6) in der Abgasrückführung angesteuert wird.

6. Verfahren nach einem der Ansprüche 1 bis 5, **dadurch gekennzeichnet, dass** das Sollwert-Signal (W) aus dem Leistungsvorgabe-Signal and wenigstens einem Parameter der Maschine (1) abgeleitet wird.

7. Verfahren nach Anspruch 6, **dadurch gekennzeichnet, dass** als Parameter wenigstens ein Signal vorgesehen ist, das aus der Drehzahl, der Abgastemperatur and der Masse der anströmenden frischen Luft gebildet wird.

8. Verfahren nach Anspruch 7, **dadurch gekennzeichnet, dass** wenigstens ein Signal als Maschinen-Parameter mit einem Referenzsignal durch Differenzwertbildung verglichen wird, wobei das Überschreiten eines vorgegebenen Differenzwertes zur Ausgabe eines Stellsignals (Y, Y1, Y2) führt.

9. Verfahren nach einem der Ansprüche 6 bis 8, **dadurch gekennzeichnet, dass** die Signale mittels A/D-Wandler in digitale Signale gewandelt and gespeichert werden, wobei anschließend ein Vergleich der gespeicherten Werte mit Hilfe digitaler Referenzwerte durchgeführt wird.

10. Verfahren nach einem der Ansprüche 1 bis 9, **dadurch gekennzeichnet, dass** im Strömungsmassen-Sensor (10) wenigstens zwei auf konstanter Temperatur gehaltene Heizwiderstande nacheinander zur Messung der Strömungsmasse angeströmt werden.

11. Verfahren nach Anspruch 10, **dadurch gekennzeichnet, dass** die wenigstens zwei Heizwiderstande jeweils von einem verstellbaren Strom (I,, 12) durchflossen werden, wobei aus der Stärke der Ströme (I₁, I₂) ein Signal für die Strömungsmasse and deren Richtung gebildet wird.

12. Verfahren nach Anspruch 11, **dadurch gekennzeichnet, dass** aus wenigstens einem pulsierenden Strom I₁, I₂ durch abwechselnde Multiplikation der Strom-Amplitude mit +1 and -1 and anschließende Differenzwertbildung der resultierende Fluss des Massestroms ermittelt wird.

13. Vorrichtung zur Abgasrückführung aus einem Austrittsbereich einer Fahrzeug-Brennkraft-Maschine in einen Lufteintrittsbereich, bei der ein mittels Regelung einstellbares Gemisch aus Abgas und einströmender Luft der Maschine zuführbar ist, wobei zur Ermittlung der Masse der einströmenden Luft ein Strömungsmassen-Sensor (14) vorgesehen ist und eine Kraftstoff-Menge in Abhängigkeit von der Luftmassen-Durchflussrate unter Berücksichtigung eines Leistungsvorgabe-Signals einstellbar ist, wobei der Austrittsbereich (4) über einen Strömungskanal (6) für die Abgasrückführung mit einem Eintrittsbereich (2) der Brennkraft-Maschine (1) verbunden ist, wobei der Strömungskanal (6) ein steuerbares Ventil (5) als Stellglied und einen weiteren Strömungsmassen-Sensor (10) aufweist, **dadurch gekennzeichnet, dass** der weitere Strömungsmassen-Sensor (10) wenigstens einen Messwiderstand und wenigstens einen Heizwiderstand aufweist

14. Vorrichtung nach Anspruch 13, **dadurch gekennzeichnet, dass** zwischen dem Austrittsbereich (4) and dem Strömungsmassen-Sensor (10) eine Abgaskühlvorrichtung (8) angeordnet ist.

15. Vorrichtung nach Anspruch 13 oder 14, **dadurch gekennzeichnet, dass** der Strömungsmassen-Sensor (10) wenigstens einen temperaturabhängigen Messwiderstand schneller Ansprechzeit aufweist.

16. Vorrichtung nach Anspruch 15, **dadurch gekennzeichnet, dass** der Messwiderstand als Platin-Dünnschicht-Element oder Platin-Dickschicht-Element ausgebildet ist.

17. Vorrichtung nach einem der Ansprüche 13 bis 16, **dadurch gekennzeichnet, dass** der Strömungsmassen-Sensor (10) wenigstens zwei Heizwiderstande und/oder einen Messwiderstand mit wenigstens einem Heizwiderstand aufweist, die jeweils in Mikrosystemtechnik ausgebildet sind.

18. Vorrichtung nach Anspruch 17, **dadurch gekennzeichnet, dass** die Heizwiderstände für einen Betrieb im Temperaturbereich von 350 bis 750 °C vorgesehen sind.

19. Vorrichtung nach Anspruch 13 bis 18, **dadurch gekennzeichnet, dass** zur Bestimmung der Strömungsrichtung wenigstens drei Heizwiderstande vorgesehen sind.

20. Vorrichtung nach Anspruch 13, **dadurch gekennzeichnet, dass** wenigstens zwei Widerstandsbahnen von Heiz- und/oder Messwiderständen jeweils auf einer plattenförmigen Membran ausgebildet sind.

21. Vorrichtung nach einem der Ansprüche 10 bis 16, **dadurch gekennzeichnet, dass** wenigstens zwei Heizwiderstände im vorgegebenen Abstand entlang der Strömungsrichtung im Massenstrom-Sensor angeordnet sind.

22. Vorrichtung nach Anspruch 17, **dadurch gekennzeichnet, dass** jeweils ein die Heizwiderstände durchfließender Wechselstrom als pulsierendes Strömungssignal einem Komparator zur Differenzwertbildung zuführbar ist.

23. Vorrichtung nach Anspruch 18, **dadurch gekennzeichnet, dass** der Komparator mit einem Verstärker zur Ausgabe eines Signals über die Stärke und die resultierende Richtung der Strömungsmenge verbunden ist.

## Claims

1. A process for partial exhaust gas recirculation into an air intake region of a motor vehicle internal combustion engine, comprising feeding to the engine a mixture of exhaust gas and in-flowing air mass, whereby the mass of air is determined by a flow rate sensor (14), and a quantity of fuel is fed as a function of the air mass flow rate taking into consideration a performance specification signal, whereby exhaust gas exiting from the engine (1) is fed to another flow rate sensor (10) in an exhaust gas recirculation channel (6), whereby an actual value signal (X, X1, X2) based on the determined flowing masses of in-flowing air and recirculated exhaust gas is formed and compared to a target value signal (w) for an optimal operating point of the engine, whereby a control deviation of the actual value signal leads to an adjustment signal, which intervenes into the exhaust gas recirculation by an adjustment member (5), **characterised in that** the other flow rate sensor (10) has at least one measurement resistor and at least one heating resistor.

2. The process as claimed in Claim 1, **characterised in that** the exhaust gas exiting from the engine (1) is cleaned of combustion products.

3. The process as claimed in Claim 1 or 2, **characterised in that** the exhaust gas exiting from the engine (1) is cooled.

4. The process as claimed in any one of Claims 1 to 3, **characterised in that** prior to entry into the second flow rate sensor (10) the exhaust gas is cooled to a temperature in a range of about 70°C to 300°C.

5. The process as claimed in any one of Claims 1 to 4, **characterised in that** by means of the adjustment signal (Y, Y1) at least one valve (5) is controlled as the adjustment member in the flow channel (6) in the exhaust gas recirculation.

6. The process as claimed in any one of Claims 1 to 5, **characterised in that** the target value signal (W) is derived from the performance specification signal and at least one parameter of the engine (1).

7. The process as claimed in Claim 6, **characterised in that** at least one signal is provided as the engine parameter, which is formed based on the basis of the rotational speed, the exhaust gas temperature and the mass of the in-flowing fresh air.

8. The process as claimed in Claim 7, **characterised in that** at least one signal as the engine parameter is compared to a reference signal by differential value formation, **characterised in that** exceeding a specified differential value leads to emitting the adjustment signal (Y, Y1, Y2).

9. The process as claimed in any one of Claims 6 to 8, **characterised in that** the signals are converted into digital values using an analog to digital converter, the digital values are stored, and subsequently a comparison of the stored values is conducted by means of digital reference values.

10. The process as claimed in any one of Claims 1 to 9, **characterised in that** in the second flow rate sensor (10) at least two heating resistors held to constant temperature are flowed past one after another to measure the flowing mass of exhaust gas.

11. The process as claimed in Claim 10, **characterised in that** at least two heating resistors are flowed through by a variable current (I₁, I₂), **characterised in that** a signal for the flowing mass and its direction is formed based on intensity of the currents (I₁, I₂).

12. The process as claimed in Claim 11, **characterised in that** based on at least one pulsating current I₁, I₂ a resulting mass flow rate is determined by alternating multiplication of current amplitudes with +1 and -1 and subsequent difference value formation.

13. A device for exhaust gas recirculation from an outlet region of a motor vehicle internal combustion engine into an air intake region, in which an adjustable mixture of exhaust gas and in-flowing air mass can be fed to the engine, whereby a flow rate sensor (14) for determining the mass of the in-flowing air mass is provided, and a quantity of fuel as a function of the air mass in-flow rate can be adjusted taking a performance specification signal into consideration, whereby the outlet region (4) is connected to an intake region (2) of the internal combustion engine (1) via a flow channel (6) for the exhaust gas recirculation, whereby the flow channel (6) has a controllable valve (5) as an adjustment member, and another flow rate sensor (10), **characterised in that** the other flow rate sensor (10) has at least one measurement resistor and at least one heating resistor.

14. The device as claimed in Claim 13, **characterised in that** an exhaust gas-cooling device (8) is arranged between the outlet region (4) and the flow rate sensor (10).

15. The device as claimed in Claim 13 or 14, **characterised in that** the flow rate sensor (10) has at least one temperature-dependent measurement resistor with rapid response time.

16. The device as claimed in Claim 15, **characterised in that** the measurement resistor is constructed as a platinum thin layer element and a platinum thick layer element.

17. The device as claimed in any one of Claims 13 to 16, **characterised in that** the flow rate sensor (10) has at least two heating resistors and/or one measurement resistor with at least one heating resistor, which are in each case constructed in microsystem technology.

18. The device as claimed in Claim 17, **characterised in that** the heating resistors are provided for operation in a temperature range of about 350 to 750°C.

19. The device as claimed in Claim 13 to 18, **characterised in that** at least two heating resistors are provided for determining the direction of flow.

20. The device as claimed in Claim 13, **characterised in that** at least two resistance strips of heating and/or measurement resistors are in each case constructed on a platelike membrane.

21. The device as claimed in any one of Claims 10 to 16, **characterised in that** at least two heating resistors are arranged at a specified spacing along a direction of flow in the second flow rate sensor.

22. The device as claimed in Claim 17, **characterised in that** in each case one alternating current flowing through one of the heating resistors is feedable to a comparator as a pulsating flow signal.

23. The device as claimed in Claim 18, **characterised in that** the comparator is connected to an amplifier for emitting a signal on the intensity and resulting direction of the flowing mass.

## Revendications

1. Procédé pour la recirculation partielle des gaz d'échappement dans une zone d'admission d'air d'un moteur à combustion interne de véhicule, dans lequel un mélange de gaz d'échappement et d'air affluant, pouvant être réglé au moyen d'un dispositif de réglage, est acheminé vers le moteur, la masse de l'air étant déterminée par un capteur de flux massique (14) et une quantité de carburant étant acheminée en fonction du débit de la masse d'air en tenant compte d'un signal de référence du débit, les gaz d'échappement sortant du moteur (1) étant acheminés vers un capteur de flux massique (10) supplémentaire dans un conduit de recirculation des gaz d'échappement (6), un signal de valeur réelle (X, X1, X2) étant formé à partir des débits déterminés de l'air affluant et des gaz d'échappement recyclés et étant comparé à un signal de valeur de consigne (W) pour un point de fonctionnement dynamique optimal du moteur, une divergence entre le signal réel et le signal de consigne entraînant un signal de réglage, qui intervient au moyen d'un organe de réglage (5) dans la recirculation des gaz d'échappement, **caractérisé en ce que** le capteur de flux massique (10) supplémentaire comporte au moins une résistance de mesure et au moins une résistance de chauffage.

2. Procédé selon la revendication 1, **caractérisé en ce que** les gaz d'échappement sortant du moteur (1) sont nettoyés des produits de combustion.

3. Procédé selon la revendication 1 ou 2, **caractérisé en ce que** les gaz d'échappement sortant du moteur (1) sont refroidis.

4. Procédé selon l'une quelconque des revendications 1 à 3, **caractérisé en ce que** les gaz d'échappement avant l'entrée dans le capteur de flux massique (10) sont refroidis à une température dans le domaine de 70°C à 300°C.

5. Procédé selon l'une quelconque des revendications 1 à 4, **caractérisé en ce que** le signal de réglage (Y, Y1) active au moins une vanne (5) formant un organe de réglage dans le conduit de circulation (6) dans le système de recirculation des gaz d'échappement.

6. Procédé selon l'une quelconque des revendications 1 à 5, **caractérisé en ce que** le signal de valeur de consigne (W) est dérivé à partir du signal de référence du débit et d'au moins un paramètre du moteur (1).

7. Procédé selon la revendication 6, **caractérisé en ce qu'**au moins un signal est prévu en tant que paramètre, lequel est formé à partir de la vitesse de rotation, de la température des gaz d'échappement et de la masse d'air frais affluant.

8. Procédé selon la revendication 7, **caractérisé en ce qu'**au moins un signal en tant que paramètre du moteur est comparé à un signal de référence par la formation d'une valeur de différence, le dépassement d'une valeur de différence prédéfinie entraînant l'émission d'un signal de réglage (Y, Y1, Y2).

9. Procédé selon l'une quelconque des revendications 6 à 8, **caractérisé en ce que** les signaux sont convertis en signaux numériques au moyen d'un convertisseur analogique/numérique et sont mémorisés, une comparaison des valeurs mémorisées étant effectuée au moyen de valeurs de référence numériques.

10. Procédé selon l'une quelconque des revendications 1 à 9, **caractérisé en ce que**, dans le capteur de flux massique (10), les fluides affluent successivement vers au moins deux résistances de chauffage, maintenues à température constante, en vue de mesurer le flux massique.

11. Procédé selon la revendication 10, **caractérisé en ce que** lesdites au moins deux résistances de chauffage sont traversées chacune par un flux (l₁, l₂) réglable, un signal pour le flux massique et la direction de celui-ci étant formé à partir de la force des flux (l₁, l₂).

12. Procédé selon la revendication 11, **caractérisé en ce qu'**au moins un flux (l₁, l₂) pulsé est déterminé par une multiplication alternée de l'amplitude du flux par +1 et -1 et une formation consécutive de la valeur de différence du flux massique résultant.

13. Dispositif pour la recirculation des gaz d'échappement sortant d'une zone de sortie d'un moteur à combustion interne de véhicule vers une zone d'admission d'air, dans lequel un mélange de gaz d'échappement et d'air affluant, apte à être réglé au moyen d'un dispositif de réglage, peut être acheminé vers le moteur, un capteur de flux massique (14) étant prévu pour déterminer la masse de l'air affluant et une quantité de carburant pouvant être réglée en fonction du débit de la masse d'air en tenant compte d'un signal de référence du débit, la zone de sortie (4) étant reliée à une zone d'admission (2) du moteur à combustion interne (1) via un conduit de circulation (6) pour la recirculation des gaz d'échappement, le conduit de circulation (6) comportant une vanne réglable (5) formant un organe de réglage et un capteur de flux massique (10) supplémentaire, **caractérisé en ce que** le capteur de flux massique (10) supplémentaire comporte au moins une résistance de mesure et au moins une résistance de chauffage.

14. Dispositif selon la revendication 13, **caractérisé en ce qu'**un dispositif de refroidissement des gaz d'échappement (8) est agencé entre la zone de sortie (4) et le capteur de flux massique (10).

15. Dispositif selon la revendication 13 ou 14, **caractérisé en ce que** le capteur de flux massique (10) comporte au moins une résistance de mesure dépendant de la température et avec un temps de réaction rapide.

16. Dispositif selon la revendication 15, **caractérisé en ce que** la résistance de mesure est conçue sous forme d'élément à couche mince en platine ou d'élément à couche épaisse en platine.

17. Dispositif selon l'une quelconque des revendications 13 à 16, **caractérisé en ce que** le capteur de flux massique (10) comporte au moins deux résistances de chauffage et/ou une résistance de mesure avec au moins une résistance de chauffage, qui sont réalisées chacune selon la technique des microsystèmes.

18. Dispositif selon la revendication 17, **caractérisé en ce que** les résistances de chauffage sont prévues pour un fonctionnement dans le domaine de températures de 350°C à 750°C.

19. Dispositif selon l'une quelconque des revendications 13 à 18, **caractérisé en ce qu'**au moins trois résistances de chauffage sont prévues pour déterminer la direction du flux.

20. Dispositif selon la revendication 13, **caractérisé en ce qu'**au moins deux bandes de résistances de chauffage et/ou résistances de mesure sont réalisées respectivement sur une membrane en forme de plaque.

21. Dispositif selon l'une quelconque des revendications 10 à 16, **caractérisé en ce qu'**au moins deux résistances de chauffage sont agencées à distance prédéfinie suivant la direction du flux dans le capteur de flux massique.

22. Dispositif selon la revendication 17, **caractérisé en ce que** respectivement un courant alternatif traversant les résistances de chauffage peut être acheminé en tant que signal du flux pulsé vers un comparateur en vue de la formation d'une valeur de différence.

23. Dispositif selon la revendication 18, **caractérisé en ce que** le comparateur est relié à un amplificateur pour émettre un signal relatif à la force et à la direction résultante de la quantité de flux.
